# EUROPEAN PATENT SPECIFICATION

(11) **EP 0 978 040 B1**
(45) Date of publication and mention of the grant of the patent: **06.05.2004**
(21) Application number: 97926095.7
(22) Date of filing: 09.06.1997
(51) Int. Cl.: G06F 12/08, G06F 3/06

(54) **MEMORY DEVICE**
SPEICHERVORRICHTUNG
SYSTEME DE MEMOIRE

(30) Priority: 21.06.1996 GB 9613088
(43) Date of publication of application: 09.02.2000
(73) Proprietor: LEXAR MEDIA, INC., Fremont, CA 94538 (US)
(72) Inventor: SINCLAIR, Alan Welsh, Cambridge CB4 4TA (GB)
(74) Representative: Flegg, Christopher Frederick
(86) International application number: PCT/GB1997/001532
(87) International publication number: WO 1997/050035

(56) References cited:
- EP-A- 0 522 780
- EP-A- 0 564 699
- EP-A- 0 702 305
- GB-A- 2 256 735
- IBM TECHNICAL DISCLOSURE BULLETIN, vol. 38, no. 4, 1 April 1995, page 121 XP000516092 "USE COMBO MEMORY CARD AS TWO DISKETTES"
- PATENT ABSTRACTS OF JAPAN vol. 018, no. 621 (P-1832), 25 November 1994 & JP 06 236241 A (SHARP CORP), 23 August 1994,
- PATENT ABSTRACTS OF JAPAN vol. 095, no. 002, 31 March 1995 & JP 06 314177 A (TOSHIBA CORP), 8 November 1994,

## Description

The present invention relates to memory devices. It finds particular application in the field of data storage in computers.

Computer systems rely on storage areas to save data which is necessary for executing programs, archiving, and other purposes. These storage areas (sometimes called mass storage areas) must be able to store data even when no power is applied to the computer, so that the data can be retrieved at some later time when power is reapplied. Thus a non-volatile storage medium is required. One common non-volatile storage medium is the magnetic disk drive, another non-volatile storage medium is a solid state disk that emulates magnetic disk drives.

These storage media have disadvantages associated with them. One disadvantage of magnetic disks is that the access time is comparatively slow because of the seek latency and rotational latency of the electro-mechanical disk drive. Solid state disks can be accessed much faster than magnetic disks, but even solid state disks can suffer from poor performance. For example, FLASH EPROM is frequently used in solid state disk applications because each cell is small so the storage density is high. However, FLASH EPROM is only block erasable, and erasure of a block of cells can take a number of seconds.

To overcome the problems of slow write and erase times, caches are sometimes used. A cache is usually a volatile memory which stores the most recent data accessed by the host. When power to the memory system is removed the data in the cache is copied to the mass storage device. The advantage of a cache is that it enables a large, slow memory to appear as a large, fast memory by adding a small fast memory.

Cache memory operates under the control of a cache manager which ensures that appropriate data is always accessible in the cache. One disadvantage of a cache is that the algorithms used by the cache manager are often very complicated so a cache is usually designed to work with a particular system and requires a large processing overhead.

One other form of cache is a software cache. A software cache is implemented by the processor of a computer. The processor uses the memory of the computer as a cache and it also uses an area of the storage medium in use to store data blocks as they are transferred to and from the cache.

It is known from EP-A-0564699 to provide a storage system with both a disk drive and a solid state disk to provide bulk storage in the disk drive and fast access memory in the solid state disk. A host connected to the system considers the memory provided by the disk drive and solid state disk as entirely separate storage devices accessed via a buffer memory which is partitioned accordingly.

It is also known from EP-A-0702305 to provide a disk drive with a controller which shuts down the disk drive when memory is idle for a predetermined period of time. A non-volatile memory duplicates storage of selected data blocks for rapid access during shut down, the data blocks being selected on the basis of history of the access to the data blocks.

Aspects of the present invention are set out in the appended claims.

According to an embodiment there is provided a data storage arrangement for a host computer or the like having a relatively slow-access mass data storage device connected thereto wherein said data storage arrangement comprises relatively fast-access data storage means consisting, at least in part, of non-volatile memory and controller means connectible to said host computer and to said mass data storage device, selectively to route data between said host computer and either said mass data storage device or said relatively fast-access data storage means.

The embodiment provides a system that can be inserted into a standard personal computer, or other data processing device, and connected to a standard storage medium such as a magnetic disk. The system uses fast non-volatile memory to provide permanent storage of data and it may also incorporate some fast memory to act as a data buffer, thus increasing the performance of the storage medium that is being used.

The embodiment differs from a software cache in a number of ways. It relates to hardware which can be connected to existing hardware to provide a cache-like function with permanent storage of the information. Since most caches are volatile, the contents of a cache must be generated over a period of time. Thus, the initial access of each data entry in the cache must be to the mass storage device. The high speed memory of the present invention is located entirely in the mass storage device: no executable code is required to occupy valuable main memory space.

The invention in defined according to claims 1 (apparatus) and 7 (method).

For a better understanding of the present invention and to show how the same may be carried into effect, reference will now be made by way of example to the accompanying drawing in which:
- Figure 1: shows a diagram of a computer system;
- Figure 2: shows a diagram of a master-slave memory system;
- Figure 3: shows a diagram of a master-slave memory system showing detail of the master unit;
- Figure 4: shows a diagram of a high speed memory; and
- Figure 5: shows a diagram of an implementation of the present invention.

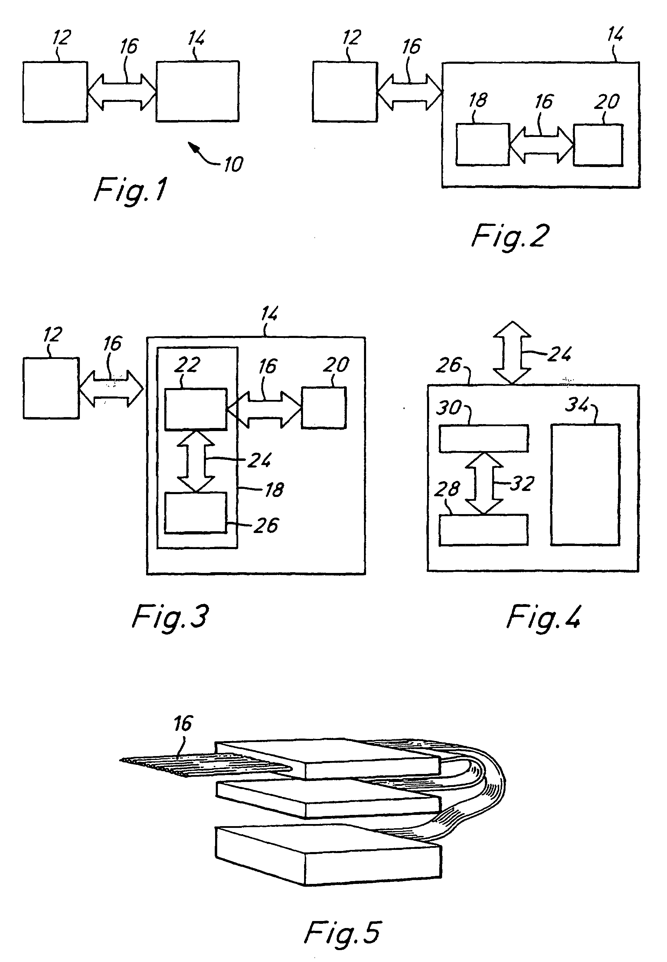

Figure 1 shows a typical arrangement for a computer system 10 where a host 12 (such as a personal computer) is connected to a memory system 14 by a standard interface 16. The standard interface could be such as is conventionally used with a magnetic disk, for example an ATA or an IDE interface). The memory system 14 stores data which is accessed by the host 12 via the standard interface 16.

The memory system 14 shown in Figure 1 is composed of a master unit 18 and a slave unit 20 connected by a standard interface 16. This is shown in Figure 2. The slave unit 20 is typically a magnetic disk which serves as the high volume storage area (the mass storage area) for storing information sent by the host 12.

The memory system 14 provides the same function to the host 12 as would be provided if the slave unit 20 was connected directly to the host 12. That is, the existence of the master-slave arrangement is transparent to the host 12.

The master unit 18 is a high speed, non-volatile memory system which comprises a controller 22, a first internal interface 24 and a high speed memory 26. The first internal interface 24 may be the same as the standard interface 16.

The master unit 18 forms a portable store which can be connected to any standard magnetic disk and appropriate standard interface 16 to improve access to the magnetic disk. The non-volatile memory capacity of the memory system 14 is the sum of the capacities of the master unit 18 and the slave unit 20.

The function of the controller 22 within the master unit 18 is to ensure that a high proportion of the data sector accesses made by the host 12 are made to the high speed memory 26 rather than the slave unit 20. This provides a higher performance than if the slave unit 20 is always accessed. The controller 22 also maintains a lookup table that stores the location of each data sector, for example, whether a data sector is in the high speed memory 26 or in the slave unit 20.

The controller 22 ensures that a high proportion of the data accesses requested by the host 12 are in the high speed memory 26 by relocating data sectors between the high speed memory 26 and the slave unit 20.

Sectors written by the host 12 would normally be located in the high speed memory 26: sectors read from the slave unit 20 would normally be simultaneously relocated to high speed memory 26. The controller 22 would normally also have access to the host's File Allocation Table (FAT) and could relocate sectors which are part of an active file (a file currently being used). Other techniques used in conventional cache memories could also be applied to the present invention.

In some embodiments of the present invention multiple high speed memories 26 may also be connected to a single controller 22.

The memory system of the present invention differs from a conventional cache memory in that both the high speed memory 26 and the slave unit 20 are non-volatile memories. Data is not temporarily located in the high speed memory 26 as a copy of the data in the slave unit 20, as is the case with a high speed cache. Only one version of each data sector is maintained. The data sector is stored either in the high speed memory 26 or in the slave unit 20. Thus the memory configuration is retained when electrical power is restored.

One of the characteristics of the present invention is that it is configured as a single device conforming to a mass storage standard and occupying two physical disk slots. In some embodiments of the present invention multiple slave units 20 are connected to a single master unit 18.

In another embodiment of the present invention the high speed memory 26 comprises two memories: a non-volatile memory 28 and a volatile memory 30 connected by a second internal interface 32. The second internal interface 32 could be identical to the first internal interface 24 or it may conform to a different standard. The volatile memory 30 is used as a buffer memory to allow fast write operations. In this embodiment the volatile memory 30 is a Static Random Access Memory (SRAM) and the non-volatile memory 28 is a FLASH EPROM. All data sectors stored in the SRAM 30 will be copied to the FLASH EPROM 28 for permanent storage.

Typically, the FLASH EPROM 28 will have some means of ensuring uniform memory usage to avoid excessive wear of the FLASH EPROM cells, this function may be implemented by a high speed memory control unit 34. Since FLASH EPROM 28 has a slow write cycle, the SRAM 30 is used to improve the performance of the master unit 18 for writing data.

If the high speed memory 26 had a fast access time and a fast write/erase cycle then the high speed memory control unit 34 would not need any additional memory, because the memory is used as a buffer for the solid state disk.

The controller 22 also has the necessary logic to move data from the high speed memory 26 to the slave unit 20 to liberate space in the high speed memory as the free space in the high speed memory 26 diminishes. The movement of data between the high speed memory 26 and the slave unit 20 is controlled by the controller 22. Numerous algorithms exist for determining when data should be relocated from one area of memory to another. For example, some algorithms ensure that the data sector which was accessed least recently is moved from the cache to the mass storage area first. Other algorithms relocate the sector that is accessed least frequently first. The present invention is suitable for use with any convenient algorithm.

It will be appreciated that various modifications may be made to the above described embodiment within the scope of the present invention. For example, although a magnetic disk was described in the embodiment, the invention could also be used with a holographic memory, a ferro-electric memory or any convenient memory medium.

## Claims

1. Apparatus (18) for connection between a computer system (12) and a relatively slow-access mass data storage device (20), the apparatus comprising a controller means (22) connectible to said host computer and to said mass data storage device; and
a relatively fast-access data storage means (26) connected to the controller means;
wherein the controller means is selectively operable to route data between said host computer, said mass data storage device and said relatively fast-access data storage means;
said controller means comprising;
means for determining whether a data sector is to be stored in the mass data storage device or the relatively fast-access data storage means such that only one version of the data sector is maintained, and means to relocate data between said relatively fast access data storage means and said mass data storage device to ensure that a greater proportion of data sector accesses made by the computer system are to the relatively fast access data storage means rather than the mass data storage device.

2. Apparatus as claimed in claim 1 wherein said relatively fast-access data storage means further includes relatively fast-access volatile memory (30) to act as a data buffer, thereby increasing the performance of the storage medium that is being used.

3. Apparatus as claimed in claim 2 wherein said volatile memory comprises Static Random Access Memory.

4. Apparatus as claimed in claim 1 wherein said relatively fast-access data storage means comprises FLASH erasable programmable read-only memory.

5. Apparatus as claimed in claim 4 wherein said relatively fast-access data storage means includes means (34) adapted to equalise usage of said erasable programmable read-only memory.

6. Apparatus as claimed in claim 4 wherein said relatively fast-access data storage means includes static random-access memory (30) to improve the speed of access of said host computer or the like for writing data.

7. Apparatus as claimed in claim 1 wherein said controller means includes storage means to store information on whether a data sector is currently in said relatively fast-access data storage means or in the mass data storage device.

8. Apparatus as claimed in claim 1 wherein said means to relocate data is operable to ensure that the data sector which was accessed least recently is moved from the relatively fast access data storage means to the mass storage area first.

9. Apparatus as claimed in claim 1 wherein said means to relocate is operable to ensure that the data sector which is accessed least frequently is moved from the relatively fast access data storage means to the mass storage area first.

10. Apparatus according to any one of the preceding claims comprising an input and an output interface having a common format whereby it may be interposed between said host computer and said mass data storage device.

11. A system comprising a computer system (12) in combination with said apparatus in accordance with any one of the preceding claims.

12. A method of operating apparatus (18) providing connection between a computer system (12) and a relatively slow-access mass data storage device (20), the apparatus comprising a controller means (22) connectible to said host computer and to said mass data storage device; and
a relatively fast-access data storage means (26) connected to the controller means;
wherein the method comprises operating the controller means to selectively route data between said host computer, said mass data storage device and said relatively fast-access data storage means;
said controller means determining whether a data sector is to be stored in the mass data storage device or the relatively fast-access data storage means such that only one version of the data sector is maintained, and relocating data between said relatively fast access data storage means and said mass data storage device to ensure that a greater proportion of data sector accesses made by the computer system are to the relatively fast access data storage means rather than the mass data storage device.

13. A method as claimed in claim 12 wherein said controller stores information on whether a data sector is currently in said relatively fast-access data storage means or in the mass data storage device.

14. A method as claimed in claim 12 wherein said relocating step ensures that the data sector which was accessed least recently is moved from the relatively fast access data storage means to the mass storage area first.

15. A method as claimed in claim 12 wherein said relocating step ensures that the data sector which is accessed least frequently is moved from the relatively fast access data storage means to the mass storage area first.

## Patentansprüche

1. Vorrichtung (18) zum Verbinden eines Rechnersystems (12) und eines Massendatenspeichergeräts (20) mit relativ langsamem Zugriff, umfassend
eine mit dem Hostrechner und dem Massendatenspeichergerät verbindbare Steuereinrichtung (22) und
eine mit der Steuereinrichtung verbundene Datenspeichereinrichtung (26) mit relativ schnellem Zugriff;
wobei die Steuereinrichtung zum wahlweisen Leiten der Daten zwischen dem Hostrechner, dem Massendatenspeichergerät und der Datenspeichereinrichtung mit relativ schnellem Zugriff ausgelegt ist und aufweist:
eine Einrichtung zum Entscheiden, ob ein Datensektor in dem Massendatenspeichergerät oder in der Datenspeichereinrichtung mit relativ schnellem Zugriff zu speichern ist, so daß nur eine Version des Datensektors behalten wird, und
eine Einrichtung zum Verschieben der Daten zwischen der Datenspeichereinrichtung mit relativ schnellem Zugriff und dem Massendatenspeichergerät, um sicherzustellen, daß sich von den vom Computersystem getätigten Datensektor-Zugriffen ein größerer Teil auf die Datenspeichereinrichtung mit relativ schnellem Zugriff richtet als auf das Massendatenspeichergerät.

2. Vorrichtung nach Anspruch 1, wobei die Datenspeichereinrichtung mit relativ schnellem Zugriff ferner einen als Datenzwischenspeicher fungierenden flüchtigen Speicher (30) mit relativ schnellem Zugriff enthält, wodurch die Leistung des benutzten Speichermediums erhöht wird.

3. Vorrichtung nach Anspruch 2, wobei der flüchtige Speicher einen statischen RAM-Speicher umfaßt.

4. Vorrichtung nach Anspruch 1, wobei die Datenspeichereinrichtung mit relativ schnellem Zugriff einen löschbaren Programmierern FLASH-ROM-Speicher umfaßt.

5. Vorrichtung nach Anspruch 4, wobei die Datenspeichereinrichtung mit relativ schnellem Zugriff eine Einrichtung (34) zum Ausgleichen der Benutzung des löschbaren Programmierern ROM-Speichers umfaßt.

6. Vorrichtung nach Anspruch 4, wobei die Datenspeichereinrichtung mit relativ schnellem Zugriff einen statischen RAM-Speicher (30) zum Erhöhen der Zugriffsgeschwindigkeit für den Hostrechner oder dergl. zum Schreiben von Daten enthält.

7. Vorrichtung nach Anspruch 1, wobei die Steuereinrichtung eine Speichereinrichtung zum Speichern von Informationen darüber enthält, ob ein Datensektor sich momentan in der Datenspeichereinrichtung mit relativ schnellem Zugriff oder im Massendatenspeichergerät befindet.

8. Vorrichtung nach Anspruch 1, wobei die Datenverschiebeeinrichtung im Betrieb sicherstellt, daß zuerst der Datensektor, dessen Zugriff die längste Zeit zurückliegt, von der Datenspeichereinrichtung mit relativ schnellem Zugriff zum Massenspeicherbereich bewegt wird.

9. Vorrichtung nach Anspruch 1, wobei die Datenverschiebeeinrichtung im Betrieb sicherstellt, daß zuerst der Datensektor, auf den am seltensten zugegriffen wird, von der Datenspeichereinrichtung mit relativ schnellem Zugriff zum Massenspeicherbereich bewegt wird.

10. Vorrichtung nach einem der vorhergehenden Ansprüche, umfassend eine Eingabeund eine Ausgabeschnittstelle, die ein gemeinsames Format aufweisen, so daß die Vorrichtung zwischen den Hostrechner und das Massendatenspeichergerät geschaltet werden kann.

11. System, umfassend ein Rechnersystem (12) in Kombination mit der Vorrichtung nach einem der vorhergehenden Ansprüche.

12. Verfahren zum Betreiben der Vorrichtung (18) zum Verbinden eines Rechnersystems (12) und eines Massendatenspeichergeräts (20) mit relativ langsamem Zugriff, wobei die Vorrichtung umfaßt:
eine mit dem Hostrechner und dem Massendatenspeichergerät verbindbare Steuereinrichtung (22) und
eine mit der Steuereinrichtung verbundene Datenspeichereinrichtung (26) mit relativ schnellem Zugriff;
wobei das Verfahren das Betreiben der Steuereinrichtung umfaßt, um die Daten Wahlsiege zwischen dem Hostrechner, dem Massendatenspeichergerät und der Datenspeichereinrichtung mit relativ schnellem Zugriff zu leiten; und
wobei die Steuereinrichtung entscheidet, ob ein Datensektor in dem Massendatenspeichergerät oder in der Datenspeichereinrichtung mit relativ schnellem Zugriff zu speichern ist, so daß nur eine Version des Datensektors behalten wird, und die Daten zwischen der Datenspeichereinrichtung mit relativ schnellem Zugriff und dem Massendatenspeichergerät verschiebt, um sicherzustellen, daß sich von den vom Computersystem getätigten Datensektor-Zugriffen ein größerer Teil auf die Datenspeichereinrichtung mit relativ schnellem Zugriff richtet als auf das Massendatenspeichergerät.

13. Verfahren nach Anspruch 12, wobei die Steuereinrichtung Informationen darüber speichert, ob ein Datensektor sich momentan in der Datenspeichereinrichtung mit relativ schnellem Zugriff oder im Massendatenspeichergerät befindet.

14. Verfahren nach Anspruch 12, wobei der Verschiebeschritt sicherstellt, daß zuerst der Datensektor, dessen Zugriff die längste Zeit zurückliegt, von der Datenspeichereinrichtung mit relativ schnellem Zugriff zum Massenspeicherbereich bewegt wird.

15. Verfahren nach Anspruch 12, wobei der Verschiebeschritt sicherstellt, daß zuerst der Datensektor, auf den am seltensten zugegriffen wird, von der Datenspeichereinrichtung mit relativ schnellem Zugriff zum Massenspeicherbereich bewegt wird.

## Revendications

1. Appareil (18) pour une connexion entre un système (12) d'ordinateur et un dispositif (20) de stockage de données de masse à accès relativement lent, l'appareil comportant un moyen à dispositif de commande (22) pouvant être connecté audit ordinateur hôte et audit dispositif de stockage de données de masse ; et
un moyen (26) de stockage de données à accès relativement rapide connecté audit moyen à dispositif de commande ;
dans lequel le moyen à dispositif de commande peut être mis en oeuvre sélectivement pour acheminer les données entre ledit ordinateur hôte, ledit dispositif de stockage de données de masse et ledit dispositif de stockage de données à accès relativement rapide ;
ledit moyen à dispositif de commande comportant :
un moyen pour déterminer si un secteur de données doit être stocké dans le dispositif de stockage de données de masse ou dans le moyen de stockage de données à accès relativement rapide de façon que seule une version du secteur de données soit maintenue, et un moyen pour relocaliser des données entre ledit moyen de stockage de données à accès relativement rapide et ledit dispositif de stockage de données de masse afin d'assurer qu'une plus grande proportion des accès du secteur de données réalisés par le système d'ordinateur a lieu vers le moyen de stockage de données à accès relativement rapide que vers le dispositif de stockage de données de masse.

2. Appareil selon la revendication 1, dans lequel ledit moyen de stockage de données à accès relativement rapide comprend en outre une mémoire volatile (30) à accès relativement rapide destinée à agir en tant que tampon de données, augmentant ainsi les performances du support de stockage qui est utilisé.

3. Appareil selon la revendication 2, dans lequel ladite mémoire volatile comprend une mémoire vive statique.

4. Appareil selon la revendication 1, dans lequel ledit moyen de stockage de données à accès relativement rapide comprend une mémoire morte programmable et effaçable FLASH.

5. Appareil selon la revendication 4, dans lequel ledit moyen de stockage de données à accès relativement rapide comprend un moyen (34) conçu pour égaliser l'utilisation de ladite mémoire morte programmable effaçable.

6. Appareil selon la revendication 4, dans lequel ledit moyen de stockage de données à accès relativement rapide comprend une mémoire vive statique (30) pour améliorer la vitesse d'accès dudit ordinateur hôte ou analogue pour l'écriture de données.

7. Appareil selon la revendication 1, dans lequel ledit moyen à dispositif de commande comprend un mbyen de stockage destiné à stocker une information indiquant si un secteur de données est alors présent dans ledit moyen de stockage à accès relativement rapide ou dans le dispositif de stockage de données de masse.

8. Appareil selon la revendication 1, dans lequel ledit moyen destiné à relocaliser des données peut fonctionner de façon à assurer que le secteur de données auquel on a accédé moins récemment est déplacé en premier du moyen de stockage de données à accès relativement rapide à la zone de stockage de masse.

9. Appareil selon la revendication 1, dans lequel ledit moyen de relocalisation peut fonctionner de façon à assurer que le secteur de données auquel on accède moins fréquemment est déplacé en premier du moyen de stockage de données à accès relativement rapide à la zone de stockage de masse.

10. Appareil selon l'une quelconque des revendications précédentes, comportant une interface d'entrée et de sortie ayant un format commun par lequel elle peut être interposée entre ledit ordinateur hôte et ledit dispositif de stockage de données de masse.

11. Système comportant un système d'ordinateur (12) en combinaison avec ledit appareil selon l'une quelconque des revendications précédentes.

12. Procédé pour faire fonctionner un appareil (18) établissant une connexion entre un système d'ordinateur (12) et un dispositif (20) de stockage de données de masse à accès relativement lent, l'appareil comportant un moyen à dispositif de commande (22) pouvant être connecté audit ordinateur hôte et audit dispositif de stockage de données de masse ; et
un moyen (26) de stockage de données à accès relativement rapide connecté audit moyen à dispositif de commande ;
dans lequel le procédé comprend la mise en oeuvre du moyen à dispositif de commande pour acheminer sélectivement des données entre ledit ordinateur hôte, ledit dispositif de stockage de données de masser et ledit moyen de stockage de données à accès relativement rapide ;
ledit moyen à dispositif de commande déterminant si un secteur de données doit être stocké dans le dispositif de stockage de données de masse ou dans le moyen de stockage de données à accès relativement rapide afin que seule une version du secteur de données soit maintenue, et relocalisant des données entre ledit moyen de stockage de données à accès relativement rapide et ledit dispositif de stockage de données de masse pour assurer qu'une plus grande proportion des accès du secteur de données réalisés par le système d'ordinateur a lieu vers le moyen de stockage de données à accès relativement rapide plutôt que vers le dispositif de stockage de données de masse.

13. Procédé salon la revendication 12, dans lequel ledit dispositif de commande stocke une information indiquant si un secteur de données se trouve alors dans ledit moyen de stockage de données à accès relativement rapide ou dans le dispositif de stockage de données de masse.

14. Procédé selon la revendication 12, dans lequel ladite étape de relocalisation assure que le secteur de données auquel on a accédé moins récemment est déplacé en premier du moyen de stockage de données à accès relativement rapide à la zone de stockage de masse.

15. Procédé selon la revendication 12, dans lequel ladite étape de relocalisation assure que le secteur de données auquel on accède moins fréquemment est déplacé en premier du moyen de stockage de données à accès relativement rapide à la zone de stockage de masse.
